# EUROPÄISCHE PATENTSCHRIFT

(11) **EP 1 852 807 B1**
(45) Veröffentlichungstag und Bekanntmachung des Hinweises auf die Patenterteilung: **18.01.2012**
(21) Anmeldenummer: 07008260.7
(22) Anmeldetag: 24.04.2007
(51) Int. Cl.: G06K 13/07, G06K 17/00, G06K 19/077

(54) **Verfahren zur Personalisierung elektronischer Datenträger und Personalisierungsautomat dafür**
Method for personalising electronic data carriers and personalisation device therefor
Procédé de personnalisation de support de données électronique et automate de personnalisation correspondant

(30) Priorität: 02.05.2006 DE 102006020227
(43) Veröffentlichungstag der Anmeldung: 07.11.2007
(60) Teilanmeldung: 10003017.0
(73) Patentinhaber: Giesecke & Devrient GmbH, 81677 München (DE)
(72) Erfinder: Finkenzeller, Klaus, 85774 Unterföhring (DE); Ebner, Claus Dr., 80995 München (DE)
(74) Vertreter: Vierheilig, Achim

(56) Entgegenhaltungen:
- EP-A- 1 507 231
- DE-A1- 19 943 285

## Beschreibung

Die Erfindung betrifft ein Verfahren zur Personalisierung elektronischer Datenträger in einem Personalisierungsautomaten sowie einen zur Durchführung des Verfahrens geeigneten Personalisierungsautomaten.

Elektronische Datenträger im Sinne der vorliegenden Erfindung sind Chipkarten, insbesondere solche im ID1-Format, aber auch Multimediakarten wie MMC- oder SD-Karten, SIM-Karten, Chips, Chipkartenmodule wie PlugIns, Spulen mit Chipmodul, USB-Sticks, Waver, SOP8 und andere Datenträger, auf denen Daten digital gespeichert werden können.

Der Begriff Personalisierung ist im weitesten Sinne für alle systematischen Individualisierungsvorgänge in Bezug auf zunächst gleiche Eigenschaften von Datenträgern zu verstehen. Die Erfindung befasst sich mit der "elektrischen" Personalisierung. Darunter ist die bestimmungsgemäße elektronische Speicherung von Individualdaten, nachfolgend als Personalisierungsdaten bezeichnet, in dafür vorgesehene Speicherelemente der Datenträger zu verstehen. Je nach Datenträgertyp können weitere Individualisierungsvorgänge im Personalisierungsautomaten stattfinden. So ist es beispielsweise üblich, Chipkarten zusätzlich "visuell" zu personalisieren, indem Informationen für die Wahrnehmung durch das menschliche Auge in den Kartenkörper ein- oder aufgebracht werden. Die Personalisierung erfolgt stufenweise in einander nachgeordneten Personalisierungsstationen. Dazu werden die zu personalisierenden Datenträger magazinweise in den Stationen bearbeitet und zwischen den Stationen transportiert und/ oder mittels automatischen Transports von einer Beschickungsstation zu einer Ausgabestation transportiert.

Um die Kosten eines aufwändigen Personalisierungsautomaten zu rechtfertigen, ist ein hoher Durchsatz, d. h. eine große Anzahl von bearbeiteten Datenträgern pro Zeiteinheit, zu verlangen. Der Durchsatz eines Personalisierungsautomaten wird beschränkt durch die Bearbeitungsstation mit dem geringsten Durchsatz. Der Flaschenhals im Bemühen um Reduzierung der Personalisierungszeiten ist zunehmend, insbesondere durch die Einführung von Flash-Speicher-Chips für GSM und dergleichen, die benötigte Speicherprogrammierzeit für die nicht-flüchtigen Speicherkomponenten des Datenträgers.

Zur Lösung dieses grundlegenden Problems gibt es zwei grundsätzliche Ansätze, die auch miteinander kombinierbar sind. Gemäß dem ersten Ansatz sind in dem Personalisierungsautomaten mehrere Stationen zur elektrischen Personalisierung parallel zueinander vorgesehen, die nacheinander beschickt werden ("Parallelbeschickung"), so dass, wenn die letzte Station beschickt worden ist, die elektrische Personalisierung innerhalb der ersten Station abgeschlossen und der Datenträger aus der ersten elektrischen Personalisierungsstation zur nächstfolgenden Personalisierungsstationen weitergeleitet werden kann. Gemäß dem zweiten Ansatz werden die elektrisch zu personalisierenden Datenträger auf einen Werkstückträger überführt, der zur Aufnahme einer Vielzahl von Datenträgern ausgebildet ist. Entweder werden die Aufnahmeplätze dieses Zwischenwerkstückträgers gleichzeitig mit der Anzahl der zu personalisierenden Datenträger bestückt und entladen (DE 199 43 285 A1) oder sie werden dem Zwischenwerkstückträger aufeinanderfolgend einzeln zugeführt und wieder abgeführt. In jedem Falle verbleiben die Datenträger auf dem Zwischenwerkstückträger für einen relativ langen Zeitraum, der sich ergibt als Multiplikation der Taktzeit des Personalisierungsautomaten mit der Anzahl der Datenträgeraufnahmen auf dem Zwischenwerkstückträger ("Pipelineprinzip"). Dieser Zeitraum ist so bemessen, dass die elektrische Personalisierung vollständig durchgeführt werden kann. In der DE 199 43 285 A1 wird eine Kombination dieser beiden Ansätze beschrieben, in denen 9 Zwischenwerkstückträger übereinander angeordnet sind und parallel beschickt werden, wobei jeder der Zwischenwerkstückträger wiederum 9 Datenträgeraufnahmen aufweist, die jeweils nach dem Pipelineprinzip beschickt und bearbeitet werden. Der für die elektrische Personalisierung zur Verfügung stehende Zeitraum beträgt somit das 81fache der Taktzeit des Personalisierungsautomaten.

Die EP 0 984 389 B1 beschreibt einen Personalisierungsautomaten mit einer elektrischen Personalisierungsstation nach dem Pipelineprinzip, bei dem die Datenträger dem Zwischenwerkstückträger einzeln nacheinander zugeführt und nach ihrer elektrischen Personalisierung wieder abgeführt werden. Der Zwischenwerkstückträger ist dabei als drehbare Platte ausgebildet. Jede Datenträgeraufnahme dieser drehbaren Platte ist mit einem zentralen Rechner vernetzt, dessen Aufgabe die Personalisierung ist. Um die Leistungsfähigkeit der elektrischen Personalisierungsstation weiter zu verbessern, ist jeder Datenträgeraufnahme eine als Personalisierungskarte bezeichnete Elektronikkarte zugeordnet, auf der ein Personalisierungsprogramm gespeichert ist. Die Elektronikkarte dient zum Lenken der Personalisierungsinformationen von dem zentralen Rechner zu den in den Datenträgeraufnahmen aufgenommenen Chipkarten abhängig vom Typ der Chipkarten, nämlich abhängig davon, ob die Chipkarte eine kontaktlose Chipkarte, eine kontaktbehaftete Chipkarte oder eine Dual-Interface-Chipkarte ist (siehe auch EP 0 797167 B1). Der die Gesamtheit der Personalisierung steuernde Rechner kontrolliert dabei das Senden der Personalisierungsparameter jeder Karte.

EP 1507 231 A1 offenbart einen Adapter für tragbare Datenträger, welcher in einem Personalisierungssystem verwendet wird. Der Adapter umfasst eine erste Schnittstelle zum Empfangen von Daten und eine zweite Schnittstelle um die empfangenen Daten auf den tragbaren Datenträger zu übertragen.

Aufgabe der vorliegenden Erfindung ist es, die elektrische Personalisierung innerhalb eines Personalisierungsautomaten flexibler zu gestalten.

Diese Aufgabe wird durch ein Verfahren und einen Personalisierungsautomaten mit den Merkmalen der nebengeordneten Ansprüche gelöst. In davon abhängigen Ansprüchen sind vorteilhafte Ausgestaltungen und Weiterbildungen der Erfindung angegeben.

Auch gemäß der vorliegenden Erfindung werden mehrere Werkstückträger mit elektrisch zu personalisierenden Datenträgern bestückt ("Parallelbeschickung"), wobei jeder der Werkstückträger zur gleichzeitigen Aufnahme einer Mehrzahl von gleichen oder unterschiedlichen elektronischen Datenträgern ausgebildet sein kann, so dass diese Mehrzahl von Datenträgern gleichzeitig elektrisch personalisiert werden kann ("Pipelineprinzip"). Der oder die elektronischen Datenträger werden mittels des betreffenden Werkstückträgers transportiert, und es ist bevorzugt, wenn auch nicht zwingend, dass die zu übertragenden Personalisierungsdaten während des Transports auf den Datenträger übertragen werden. Wie im vorbeschriebenen Stand der Technik werden die Personalisierungsdaten von einem zentralen Verwaltungssystem des Personalisierungsautomaten über den Werkstückträger auf den elektronischen Datenträger übertragen. Indem mehrere solcher Werkstückträger vorgesehen sind, ist es möglich, die Personalisierung auf diesen Werkstückträgern sich zeitlich überlappend parallel durchzuführen.

Zur Erhöhung der Flexibilität der elektrischen Personalisierung ist nun erfindungsgemäß vorgesehen, dass der Werkstückträger die Übertragung der Personalisierungsdaten auf den elektronischen Datenträger autonom steuert. Anders als im Stand der Technik wird das Senden der Personalisierungsparameter somit nicht durch das zentrale Verwaltungssystem sondern vom Werkstückträger selbst kontrolliert. Das zentrale Verwaltungssystem wird dadurch deutlich entlastet.

Dieses erfindungsgemäße Prinzip kann in verschiedener Hinsicht vorteilhaft genutzt werden. Beispielsweise können die Werkstückträger so ausgebildet sein, dass sie aus der Fertigungslinie vorübergehend ausgekoppelt werden, z. B. in dem Falle, dass die elektrische Personalisierung auf dem Weg des Werkstückträgers durch die Personalisierungsstation nicht vollständig durchgeführt worden ist. Dann kann der betreffende Werkstückträger in eine Wartestation oder Warteschleife überführt und nach Vollendung der elektrischen Personalisierung in die Fertigunglinie zurückgeführt werden. Der betreffende Werkstückträger kann aber auch in einem kontinuierlichen Kreislauf mit den in der Entladestation entladenen Werkstückträgern zur Beschickungsstation zurückgeführt werden, so dass der elektrisch zu personalisierende Datenträger die Fertigungslinie mindestens ein weiteres Mal durchläuft, bis die elektrische Personalisierung erfolgreich war oder bis der betreffende elektronische Datenträger als nicht personalisierbar eingestuft und von dem betreffenden Werkstückträger entfernt wird.

Die autonome Steuerung des Werkstückträgers kann in einer bevorzugten Ausführungsform so eingerichtet sein, dass der Werkstückträger eigenständig Kontakt mit dem zentralen Verwaltungssystem aufnimmt, um die Personalisierungsdaten vom Verwaltungssystem anzufordern. Die Personalisierung des Datenträgers erfolgt dann völlig unabhängig vom Verwaltungssystem. Vorzugsweise werden lediglich Statusmeldungen betreffend den aktuellen Status des Personalisierungsvorgangs vom Werkstückträger an das Verwaltungssystem gesendet.

Zur visuellen Prüfung durch eine Bedienperson des Personalisierungsautomaten oder ggf. zur maschinellen Prüfung können die Statusinformationen betreffend den Status der Übertragung der Personalisierungsdaten in den Speicher des elektrischen Datenträgers auch optisch angezeigt werden, beispielsweise auf einem Display des Werkstückträgers.

Die vom Verwaltungssystem angeforderten Personalisierungsdaten können auf dem Werkstückträger vor ihrer Übertragung an den elektronischen Datenträger zwischengespeichert werden, wobei zum Zwischenspeichern vorzugsweise ein Speicher mit hoher Programmiergeschwindigkeit eingesetzt wird, z. B. ein RAM. Das zentrale Verwaltungssystem ist dadurch wesentlich kürzer in dem Personalisierungsprozess involviert.

Die autonome Steuerung der elektrischen Personalisierung durch den Werkstückträger kann des weiteren so eingerichtet sein, dass der Werkstückträger autonom eine Erfolgskontrolle dahingehend durchführt, ob die Übertragung der Personalisierungsdaten in den Speicher des Datenträgers erfolgreich durchgeführt wurde. Dies muss nicht in einer separaten Station erfolgen. Dadurch wird das Verwaltungssystem zusätzlich deutlich entlastet.

Eine weitere Entlastung des zentralen Verwaltungssystems lässt sich dadurch erreichen, dass auf eine Vielzahl von elektronischen Datenträgern identisch zu übertragende Personalisierungsdaten in einem separaten Datenträger oder einem anderen separaten Speicher des Werkstückträgers gespeichert werden. Vom Werkstückträger brauchen dann nur noch, soweit erforderlich, ganz individuelle Personalisierungsdaten vom zentralen Verwaltungssystem angefordert zu werden. Die identisch zu übertragenden Personalisierungsdaten können auf dem Werkstückträger gespeichert werden, bevor der Werkstückträger an den Personalisierungsautomaten, insbesondere also in die eigentliche Fertigungslinie des Personalisierungsautomaten, übergeben wird. Entsprechend weniger Daten müssen innerhalb der Fertigungslinie, also zwischen der Beschickungsstation und der Entladestation, zwischen dem Werkstückträger und dem zentralen Verwaltungssystem ausgetauscht werden. Bei der individuellen Personalisierung der vom Werkstückträger transportierten elektronischen Datenträger werden daher sowohl Personalisierungsdaten aus dem separaten Datenträger des Werkstückträgers als auch gegebenenfalls weitere individuelle Personalisierungsdaten, die vom zentralen Verwaltungssystem individuell angefordert werden, auf den elektronischen Datenträger übertragen. Dadurch lässt sich die Belastung des zentralen Verwaltungssystems entzerren.

Bei den elektronischen Datenträgern kann es sich um kontaktlose oder kontaktbehaftete Datenträger oder um Dual-Interface-Datenträger handeln, die auf beide Arten extern kommunizieren können. Dementsprechend weist auch der Werkstückträger ein oder mehrere entsprechend ausgebildete Kommunikationsschnittstellen auf. Vorteilhafterweise erfolgt der Datentransfer zwischen dem Verwaltungssystem und dem Werkstückträger über eine erste, kontaktlose Schnittstelle, insbesondere über Funk oder über eine Infrarot- oder Bluetooth-Schnittstelle, um einen möglichst flexiblen Einsatz des Werkstückträgers zu ermöglichen. Falls auch die Schnittstelle zwischen dem Werkstückträger und dem zu individualisierenden Datenträger eine kontaktlose Schnittstelle ist, ist es bevorzugt, beide kontaktlose Schnittstellen als gemeinsame Schnittstelle sowohl zur Datenübertragung zwischen dem Verwaltungssystem und dem Werkstückträger als auch zur Datenübertragung zwischen dem Werkstückträger und dem elektronischen Datenträger zu nutzen, die zur Vermeidung von Kollisionen beispielsweise im Multiplexverfahren betreibbar sind.

Zusätzlich zu den beiden vorbeschriebenen Schnittstellen können am Werkstückträger eine oder mehrere zusätzliche Schnittstellen zum Zwecke der Kommunikation zwischen mindestens zwei Werkstückträgern vorgesehen sein. Der Datentransfer erfolgt dann beispielsweise vom Verwaltungssystem zu dem Verwaltungssystem am nächsten liegenden Werkstückträger, beispielsweise kontaktlos, oder an eine konkrete Datenanschlussstelle der Fertigungslinie, beispielsweise kontaktbehaftet, und wird von dort von einem Werkstückträger zum nächsten weitergeleitet. Dies ermöglicht es insbesondere, ein mit dem Verwaltungssystem verknüpftes Bussystem zur Datenübertragung zwischen einer Mehrzahl von Werkstückträgern vorzusehen.

Der Datentransfer zwischen den Werkstückträgern kann wiederum kontaktbehaftet oder kontaktlos erfolgen, beispielsweise über Infrarot, Near Field Communication (NFC) oder Bluetooth, oder durch kapazitive Kopplung, etc. Eine bevorzugte Ausführungsform zur Datenübertragung zwischen einzelnen Werkstückträgern sieht vor, dass die Werkstückträger während ihres Transports durch die Fertigungslinie über Führungsstifte miteinander verbunden sind, über die dann auch die Datenübertragung zwischen den Werkstückträgern erfolgt. Die Führungsstifte können beispielsweise aus Metall sein und auf der Gegenseite in entsprechende Kontaktnuten eines benachbarten Werkstückträgers eingeführt sein. Die Führungsstifte können auch aus einem Licht leitenden Kunststoff hergestellt sein, über den eine optische Verbindung herstellbar ist.

Zusätzlich zu den Personalisierungsdaten kann auch Energie an den Werkstückträger übertragen werden, den dieser zur Durchführung der Personalisierung benötigt. Die Energieübertragung kann wiederum kontaktlos oder kontaktbehaftet stattfinden, wobei es wiederum bevorzugt ist, für die Datenübertragung und Energieübertragung an den Werkstückträger eine gemeinsame Schnittstelle zu nutzen.

Insbesondere ist es vorteilhaft, wenn der Werkstückträger mit einer eigenen Energiequelle ausgerüstet ist, die vorzugsweise wiederaufladbar ist, wie beispielsweise ein Akkumulator oder eine wiederaufladbare Batterie.

Die Energieübertragung kann über die zuvor beschriebenen Führungsstifte erfolgen, über die die Werkstückträger während ihres Transports miteinander verbindbar sind. Die Energieübertragung muss aber nicht während des Transports der Werkstückträger stattfinden. Stattdessen können die Werkstückträger auch aus der Fertigungslinie ausgekoppelt und außerhalb der Fertigungslinie wiederaufgeladen werden. Vorzugsweise wird der Ladezustand der Energiequelle, sei es eine austauschbare Batterie oder eine wiederaufladbare Energiequelle, zur visuellen Kontrolle am Werkzeugträger angezeigt.

Das Auskoppeln der Werkzeugträger aus der Fertigungslinie kann auch zu anderen Zwecken erfolgen, beispielsweise zum Zwecke der Wartung des Werkstückträgers oder zum Zwecke der Umprogrammierung der Steuerung des Werkstückträgers oder zur Speicherung neuer Daten in den vorgenannten separaten Speicher des Werkstückträgers, der zur Speicherung der auf mehreren elektronischen Datenträgern identisch zu übertragenden Personalisierungsdaten dient.

Nachfolgend wird die Erfindung beispielhaft anhand der begleitenden Zeichnungen beschrieben. Darin zeigen:
- Fig. 1A: im Querschnitt einen erfindungsgemäßen Werkstückträger mit mehreren Aufnahmen für elektronische Datenträger unterschiedlicher Bauart,
- Fig. 1B: den Werkstückträger aus Fig. 1A in Draufsicht,
- Fig. 2: schematisch einen systematischen Überblick des erfindungsgemäßen Personalisierungsverfahrens und Personalisierungsautomaten,
- Fig. 3: ein Beispiel für die Personalisierung in einer elektrischen Personalisierungsstation,
- Fig. 4: Schematisch ein Beispiel für eine erfindungsgemäße elektrische Personalisierungsstation,
- Fig. 5: ein erstes Ausführungsbeispiel eines Werkstückträgers und
- Fig. 6: ein zweites Ausführungsbeispiel eines Werkstückträgers.

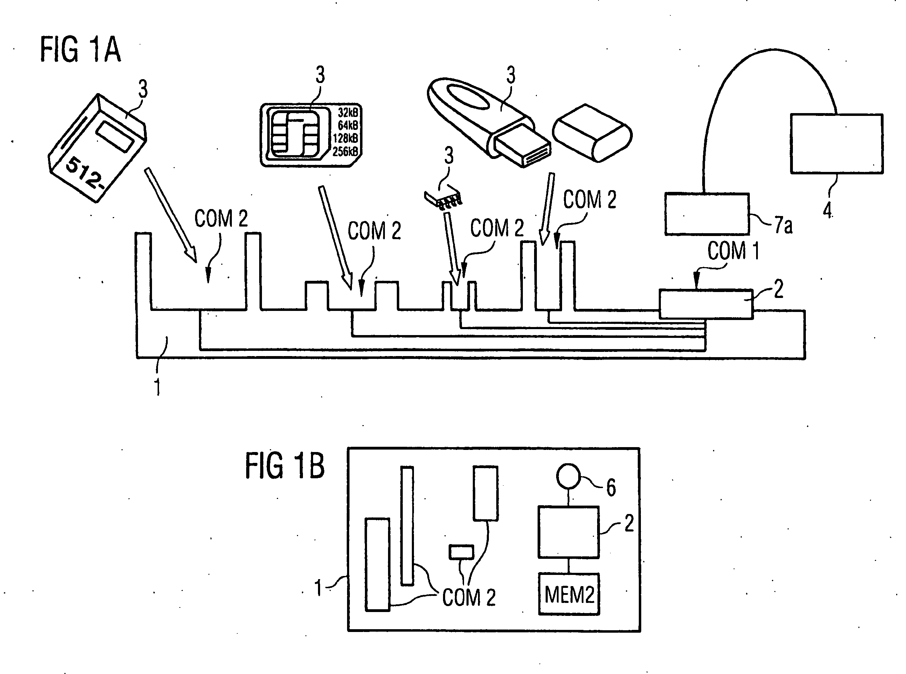

Fig. 1A zeigt schematisch im Querschnitt einen Werkstückträger 1 mit vier Werkstückaufnahmen, die zur Aufnahme unterschiedlicher elektronischer Datenträger 3 ausgebildet sind, im dargestellten Ausführungsbeispiel zur Aufnahme einer Multimediakarte, einer SIM-Karte, eines SOP8 und eines USB-Sticks. Fig. 1B zeigt denselben Werkstückträger 1 schematisch in Draufsicht. Zusätzlich zu den Werkstückaufnahmen weist der Werkstückträger 1 intelligente Steuerungsmittel 2 auf, die mit den Werkstückaufnahmen derart verbunden sind, dass über eine Schnittstelle COM 2 an jeder der Werkstückaufnahmen Daten auf die darin aufgenommenen elektronischen Datenträger 3 übertragen werden können. Eine weitere Schnittstelle COM 1 der Steuerungsmittel 2 kommuniziert mit einer Schnittstelle 7a einer hier nicht näher dargestellten elektrischen Programmierstation 7, über die die auf die elektronischen Datenträger 3 zu transferierenden Personalisierungsdaten von einem zentralen Verwaltungssystem 4 übertragen werden. Eine wiederaufladbare Batterie 6 (Fig. 1B) und ein als austauschbare Speicherkarte ausgebildeter separater Datenträger MEM 2 sind mit dem programmierbaren Steuerungsmittel 2 verbunden.

Die unterschiedlich ausgebildeten Werkstückaufnahmen ermöglichen einen flexiblen Einsatz der Werkstückträger 1 für die Personalisierung unterschiedlicher elektronischer Datenträger 3. So kann in einer mit diesen Werkstückträgern 1 ausgerüsteten elektrischen Personalisierungsstation zunächst eine Charge Multimediakarten und anschließend eine Charge SIM-Karten bearbeitet werden, ohne dass die Personalisierungsstation dazu speziell angepasst werden muss. Wenn der Werkstückträger 1 ID-1-Format besitzt, können in derselben Personalisierungsstation sowohl Chipkarten mit ID-1-Format in herkömmlicher Weise als auch der Werkstückträger 1 zur Aufnahme elektronischer Datenträger 3 mit anderen Formfaktoren personalisiert werden. Selbstverständlich sind auch andere Werkstückträgertypen erfindungsgemäß verwendbar, also beispielsweise ein Werkstückträger zur Aufnahme einer oder mehrerer Chipkarten im ID-1-Format.

Während die Schnittstellen COM 2 hier als galvanische Schnittstellen zur kontaktbehafteten Datenübertragung zwischen den zu personalisierenden elektronischen Datenträgern 3 und dem intelligenten Steuerungsmittel 2 ausgebildet sind, z. B. nach ISO/IEC7816 oder USB, können die Schnittstellen COM 2 auch als kontaktlose Schnittstellen ausgebildet sein, z. B. nach ISO/IEC14443 oder NFC (Near Field Communication).

Ebenso kann die Schnittstelle COM 1 zwischen dem Werkstückträger 1 bzw. dem intelligenten Steuerungsmittel 2 und zur Schnittstelle 7a der elektrischen Personalisierungsstation als Kontaktverbindung oder als Kontaktlosverbindung ausgebildet sein, z. B. als WLAN-Modem oder als Infrarot-Verbindung. Über die Schnittstelle COM 1 wird dem Werkstückträger 1 des weiteren Energie zugeführt, die, sofern sie nicht unmittelbar zur Datenverarbeitung innerhalb des intelligenten Steuerungsmittels 2 genutzt wird, in der wiederaufladbaren Batterie 6 gepuffert wird. Falls sowohl die Schnittstelle COM 1 als auch die Schnittstelle COM 2 als kontaktlose Schnittstellen ausgebildet sind, kann die Schnittstelle COM 1 gleichzeitig als Schnittstelle zur Kommunikation zwischen dem intelligenten Steuerungsmittel 2 und den zu personalisierenden elektronischen Datenträgern 3 dienen. Die separaten Schnittstellen COM 2 können dann entfallen. Es ist lediglich durch eine geeignete Schaltung innerhalb des intelligenten Steuerungsmittels 2 dafür zu sorgen, dass eine Kollision zwischen den einzelnen Datenübertragungskanälen vermieden wird.

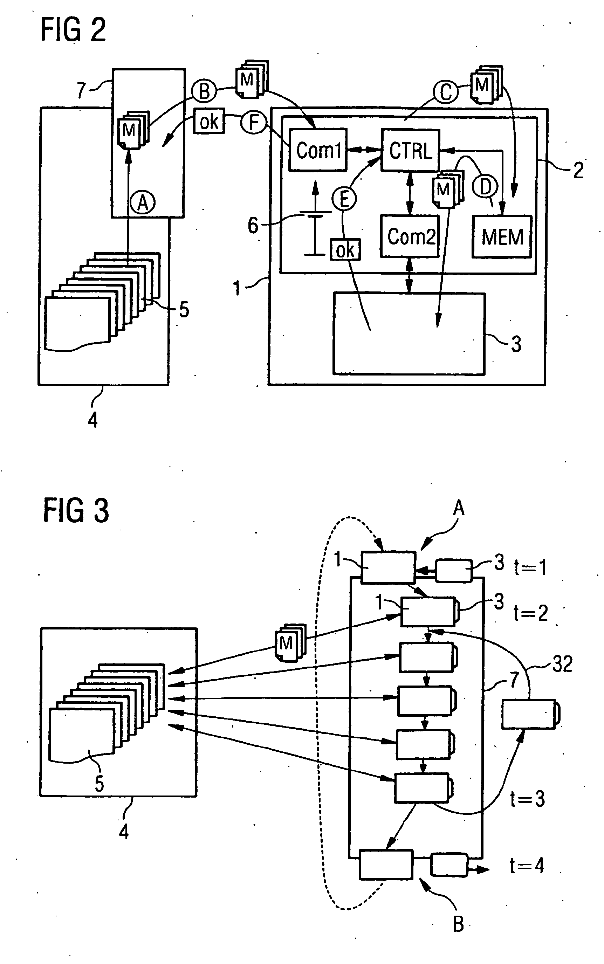

Anhand Fig. 2 wird nachfolgend ein elektrisches Personalisierungsverfahren unter Verwendung eines Werkstückträgers 1 gemäß den Fig. 1A und 1B erläutert. Im Unterschied zu den Fig. 1A, 1B besitzt der Werkstückträger 1 gemäß Fig. 2 jedoch keine mit dem intelligenten Steuerungsmittel 2 verbundene separate Speicherkarte MEM 2, könnte aber eine besitzen. Auch ist der Werkstückträger nur zur Aufnahme eines einzigen Datenträgers, z.B. in ID-1-Format, ausgebildet. Er könnte auch mehrere solcher Datenträger aufnehmen.

In einem ersten Schritt A wird ein Satz von Personalisierungsdaten M, die sich auf die aktuell anliegenden Personalisierungsaufgaben und/ oder auf die Identität des Werkstückträgers 1 und/oder auf den bzw. die darin geladenen Datenträger 3 beziehen, von einem zentralen Verwaltungssystem 4 eines Personalisierungsautomats an eine elektrische Personalisierungsstation 7 übergeben, um von dort mittels des intelligenten Steuerungsmittels 2 des Werkstückträgers 1 im anschließenden Schritt B abgerufen zu werden. Der Schritt A ist optional, denn der Personalisierungsautomat kann auch so eingerichtet werden, dass die Personalisierungsdaten M direkt vom zentralen Verwaltungssystem 4 an den Werkstückträger 1 übergeben werden.

Das intelligente Steuerungsmittel 2 umfasst im dargestellten Ausführungsbeispiel eine programmierbare Steuerung CTRL, zwei voneinander getrennte kontaktlose Schnittstellen COM 1 und COM 2 zur Kommunikation mit der Personalisierungsstation 7 einerseits und dem auf dem Werkstückträger 1 geladenen elektronischen Datenträger 3 andererseits, eine aufladbare Energiequelle 6 und einen Speicher MEM, der zur zügigen Zwischenspeicherung von Daten beispielsweise als RAM oder in anderer Speichertechnologie mit hoher Programmiergeschwindigkeit ausgebildet ist.

Die programmierbare Steuerung CTRL fordert im Schritt B Personalisierungsdaten M über die Schnittstelle COM 1 von der elektrischen Programmierstation 7 an.

Die angeforderten Personalisierungsdaten M werden in einem Schritt C, der optional ist, im Speicher MEM des intelligenten Steuerungsmittels 2 zwischengespeichert, bevor die Personalisierungsdaten im Schritt D unter der Kontrolle der programmierbaren Steuerung CTRL über die Schnittstelle COM 2 in einen nicht-dargestellten Speicher des elektronischen Datenträgers 3 übertragen werden.

Vorzugsweise führt die programmierbare Steuerung CTRL selbstständig eine Erfolgskontrolle durch, ggf. unter Rückgriff auf den im Werkstückträger 1 integrierten Energiespeicher 6 oder abhängig von einer kontinuierlichen oder periodischen Energiezufuhr über die Schnittstelle COM 1 oder eine separate Schnittstelle.

Nach Abschluss der Personalisierung wird im Schritt E der Status quo des im Werkstückträger 1 aufgenommenen Datenträgers 3 registriert. Gegebenenfalls kann in einem weiteren Schritt F eine entsprechende Statusmeldung an die elektrische Personalisierungsstation 7 oder direkt an das zentrale Verwaltungssystem 4 gemeldet werden und/oder der aktuelle Status z. B. über ein nicht-dargestelltes Display am Werkstückträger 1 angezeigt werden.

Fig. 3 zeigt schematisch den Ablauf der Personalisierung der Datenträger 3 in der elektrischen Personalisierungsstation 7. Zu einem Zeitpunkt t =1 wird ein Werkstückträger 1 an einer Beschickungsstation A mit einem zu personalisierenden elektronischen Datenträger 3 bestückt. Ab dem Zeitpunkt t = 2 bewegt sich der Werkstückträger 1 durch die elektrische Personalisierungsstation 7, in der sich bereits fünf weitere, mit entsprechenden elektronischen Datenträgern 3 bestückte Werkstückträger 1 befinden. Während des Transports baut der Werkstückträger 1 einen Kontakt zum zentralen Verwaltungssystem 4 auf, in dem die individuellen Personalisierungsdaten M als Datensätze 5 vorliegen, und fordert die Personalisierungsdaten M selbstständig an. Sofern zu einem Zeitpunkt t = 3, der vor dem Eintreffen des Werkstückträgers 1 an der Entladestation B der Personalisierungsstation 7 liegt, der Personalisierungsprozess noch nicht abgeschlossen ist, wird der betreffende Werkstückträger aus der Fertigungslinie in ein Zwischenlager 32 ausgekoppelt, das als Warteschleife ausgebildet sein kann. Im dargestellten Ausführungsbeispiel wird der betreffende Werkstückträger 1 zurückgeführt und an eine frühere Stelle innerhalb der Fertigungslinie wieder in die Fertigungslinie eingekoppelt. Der Aus- und Einkoppelprozess kann ggf. für denselben Werkstückträger mehrfach durchgeführt werden, bis die Personalisierung des elektronischen Datenträgers 3 vollständig abgeschlossen ist. Um den Prozessablauf nicht unnötig häufig zu stören, ist es jedoch bevorzugt, den betreffenden Werkstückträger 1 erst dann in die Fertigungslinie zurückzuführen, wenn die Personalisierung abgeschlossen ist. Dies ist aufgrund der autonomen Steuerung des Werkstückträgers 1 möglich, weil der Werkstückträger 1 die Personalisierung des Datenträgers 3 selbstständig abwickelt. Während des Personalisierungsprozesses werden vom Werkstückträger 1 an die Personalisierungsstation 7 lediglich Statusinformationen über den Status des durchzuführenden Personalisierungsprozesses gesendet.

Am Austritt der Personalisierungsstation 7 wird zu einem Zeitpunkt t=4 der personalisierte Datenträger 3 dem Werkstückträger 1 in der Entladestation B entnommen und der Werkstückträger 1 zur Beschickungsstation am Anfang der Personalisierungsstation 7 zurückgeführt, um mit einem weiteren Datenträger 3 wiederverwendet zu werden.

Anstatt im Schritt B (Fig. 2) die Gesamtheit der benötigten Personalisierungsdaten M über die Schnittstelle COM 1 anzufordern, können einzelne Personalisierungsdaten, insbesondere solche die identisch auf mehrere elektronische Datenträger zu übertragen sind, in einem separaten Datenspeicher des Werkstückträgers 1 gespeichert werden, beispielsweise in dem Speicher MEM oder in der mit dem intelligenten Steuerungsmittel 2 verbundenen Speicherkarte MEM 2 aus Figur 1A. Die Speicherkarte MEM 2kann als SAM (Secure Authentication Module) in Form einer MEM wird mit den betreffenden Personalisierungsdaten versehen oder die entsprechende Speicherkarte MEM 2 dem Werkstückträger 1 zugeführt, bevor der Werkstückträger der Fertigungslinie übergeben wird, d. h. bevor der Werkstückträger in der Personalisierungsstation 7 mit dem elektronischen Datenträger 3 bestückt wird.

Bei der Übertragung der Personalisierungsdaten auf den zu personalisierenden elektronischen Datenträger 3 wird dann ein Teil der Personalisierungsdaten aus dem Speicher MEM oder aus der separaten Speicherkarte MEM 2 und ein anderer Teil über die Schnittstelle COM 1 von der programmierbaren Steuerung CTRL angefordert. Es liegt aber auch im Rahmen der vorliegenden Erfindung, dass die Gesamtheit der auf den elektronischen Datenträger zu übertragenden Personalisierungsdaten vor der Übergabe des Werkstückträgers 1 in die Fertigungslinie in dem Speicher MEM oder vorzugsweise in der separaten Speicherkarte MEM 2 gespeichert wird. Die Speicherkarte MEM 2 dient dann als auftragsspezifischer Informationsträger, dem während der Personalisierung des Datenträgers 3 alle wesentlichen Informationen entnommen werden. Die Speicherkarte MEM 2 kann auch als aktive Komponente ausgebildet sein, indem beispielsweise wesentliche Informationen von diesem erzeugt werden, wie z. B. die Generierung von Schlüsseln, Signaturen und dergleichen.

Die Bestückung und Entnahme der Speicherkarten MEM 2 aus dem Werkstückträger 1 kann manuell oder durch die Personalisierungsstation 7 erfolgen. Es ist auch möglich, dass die Werkstückträger 1 in einem ersten Durchlaufzyklus durch die Personalisierungsstation 7 mit den Speicherkarten MEM 2 bestückt und die Werkstückträger 1 erst in einem weiteren Durchlauf mit den zu personalisierenden Datenträgern 3 bestückt werden, um dann die Werkstückträger 3 während des Transports zu personalisieren.

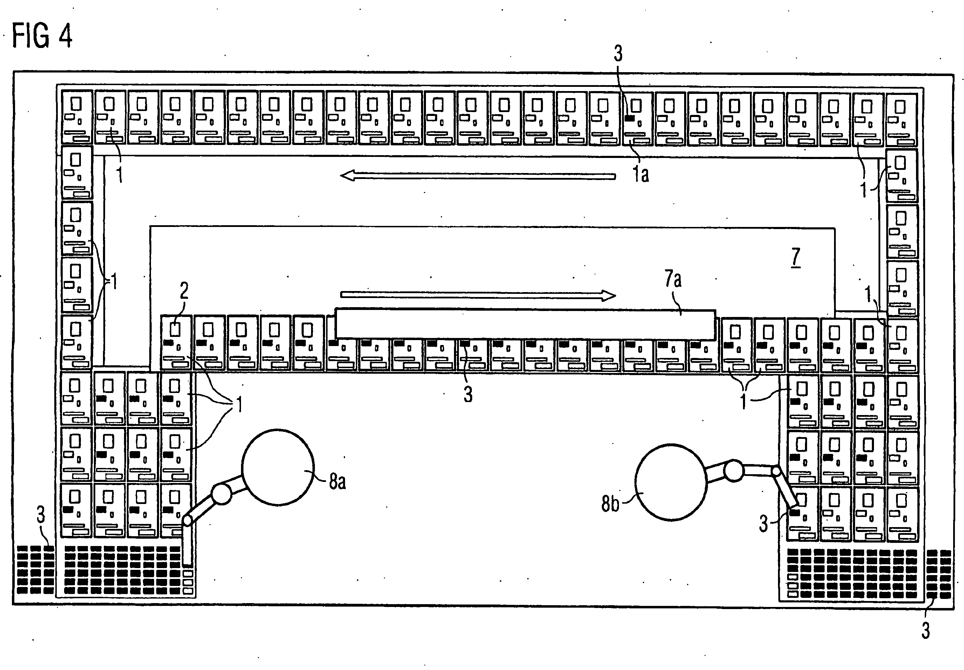

Fig. 4 zeigt schematisch in Draufsicht eine elektrische Personalisierungsstation 7gemäß eines besonderen Ausführungsbeispiels mit einer vorgeschalteten Beschickungsstation, in der leere Werkstückträger 1 gemäß Fig. 1 mittels eines Handhabungsautomats 8a mit Chips 3 bestückt werden, und einer nachgeschalteten Entnahmestation mit einem Handhabungsautomat 8b, in der die personalisierten Chips 3 den Werkstückträgern 1 wieder entnommen und weitertransportiert werden. Über eine separate Transportstrecke werden die leeren Werkstückträger von der Entnahmestation zur Bestückungsstation zurückgeführt, so dass sich ein kontinuierlicher Kreislauf ergibt. Die Entnahme- und Bestückungsstationen können auch zusammenfallen.

Der Datentransfer über die Schnittstelle COM 1 der Werkstückträger 1 und die Schnittstelle 7a der Personalisierungsstation 7 erfolgt in diesem Ausführungsbeispiel kontaktbehaftet. Die Personalisierung der Chips 3 besteht beispielsweise lediglich in einer Codierung des Chips. In der Transportstrecke zur Rückführung der Werkstückträger 1 von der Entladestation zur Bestückungsstation befindet sich ein Werkstückträger 1a, der noch mit einem Chip 3 bestückt ist. Dabei handelt es sich um einen Chip 3, dessen Personalisierung vom Werkstücksträger 1nicht rechtzeitig abgeschlossen werden konnte. Dieser Chip wird daher erst nach dem nächsten Durchlauf durch die Personalisierungsstation 7 in der Entladestation dem Werkstückträger entnommen, sofern bis dahin die Personalisierung erfolgreich abgeschlossen worden ist. Falls sich eine Personalisierung als unmöglich erweist oder der Chip aus anderen Gründen als untauglich erkannt wird, wird er in der Entnahmestation entsorgt.

Zusätzlich kann die Personalisierungsstation 7 mit speziellen Warteschleifenkonstruktionen ergänzt werden, die je nach Bedarf dafür sorgen, dass die Transportzeiten hinreichend lang sind für die Abarbeitung des Personalisierungsprozesses und/ oder in der einzelne Werkstückträger 1 über längere Zeit verbleiben können, um z. B. den Energiespeicher 6 aufzuladen und/oder eine Neuprogrammierung der Steuerung CTRL des intelligenten Steuerungsmittels 2 vorzunehmen. Das Aussortieren eines Werkstückträgers 1 zum Laden des Energiespeichers 6 kann an einer geeigneten Stelle der Personalisierungsstation 7 durch eine Statusabfrage des Werkstückträgers 1 eingeleitet werden.

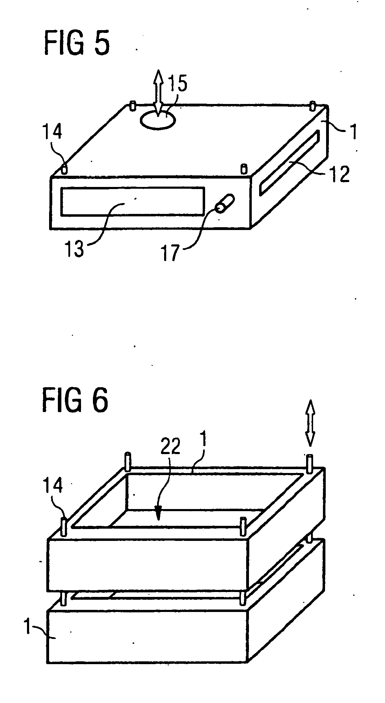

Fig. 5 und 6 zeigen schematisch zwei bevorzugte Ausführungsbeispiele für einen Werkstückträger 1, in dem beispielsweise jeweils eine Chipkarte im ID-1-Format aufgenommen werden kann.

Der Werkstückträger 1 gemäß Fig. 5 besitzt eine Aufnahmevorrichtung 12, in die ein zu personalisierender Datenträger 3 eingesteckt werden kann. Eine weitere Aufnahmevorrichtung kann vorgesehen sein, um eine separate Speicherkarte MEM 2 mit darauf hinterlegten Personalisierungsdaten aufzunehmen. Der Werkstückträger 1 gemäß Fig. 5 eignet sich insbesondere zur Aufnahme eines für die kontaktbehaftete Datenübertragung ausgebildeten Datenträgers 3, z. B. nach ISO/IEC 7816 oder USB. Er kann aber auch für kontaktlose Datenträger verwendet werden. Zur besseren Lagerung oder Stapelung während des Transports einer Vielzahl von Werkstückträgern 1 ist das Gehäuse des Werkstückträgers 1 mit Führungsstiften 14 und entsprechenden Nuten auf der gegenüberliegenden Seite des Werkstückträgers 1 ausgestattet. Zweckmäßigerweise ist der Werkstückträger 1 mit einer, beispielsweise mechanischen, Auswurfeinrichtung für die Datenträger 3 ausgestattet, um die Datenträger der Aufnahmevorrichtung 12 bei Bedarf, beispielsweise in der Entladestation, in einfacher Weise automatisch zu entnehmen. Zur Aktivierung der Auswurfeinrichtung dient eine Auswurfauslösevorrichtung 17, die z. B. als Schalter oder als IR-Empfänger ausgebildet sein kann, so dass der Datenträger 3 beim Vorbeitransport des Werkstückträgers 1 an einer entsprechend vorbestimmten Position der Personalisierungsstation 7 gezielt ausgeworfen werden kann.

Optische Anzeigemittel 13, z. B. in Gestalt eines alphanumerischen Displays, sind an einer Seite des Werkstückträgers 1 vorgesehen, um beispielsweise den Status eines gerade durchzuführenden Personalisierungsprozesses und/ oder den Betriebszustand des Werkstückträgers 1, insbesondere den Ladezustand einer im Werkstückträger 1 integrierten Energiequelle 6, anzuzeigen.

Darüber hinaus ist der Werkstückträger 1 mit einer Schnittstelle 15 ausgestattet, die zur Datenkommunikation zwischen benachbarten Werkstückträgern 1 dient und beispielsweise als IR-Schnittstelle, NFC-Schnittstelle, kapazitive Schnittstelle, etc. realisiert sein kann. Dies ermöglicht ein Einkoppeln der Personalisierungsdaten in die Werkstückträger 1 an einer bestimmten Stelle der Personalisierungsstation 7 und Weiterleitung der Daten von Werkstückträger zu Werkstückträger über die Schnittstellen 15. Auf diese Weise kann auch ein Bussystem zur Kommunikation aller verbundenen Werkstückträger 1 untereinander sowie mit dem zentralen Verwaltungssystem 4 realisiert werden.

Alternativ oder ergänzend können die Führungsstifte 14 für den Datentransfer und/ oder Energietransfer zwischen benachbarten Werkstückträgern 1 eingesetzt werden. Die Führungsstifte können aus Metall bestehen und somit eine galvanische Verbindung herstellen, oder sie können aus einem elektrisch nicht-leitenden Kunststoff hergestellt sein und eine optische Verbindung herstellen.

Das Ausführungsbeispiel gemäß Fig. 6 unterscheidet sich von dem Ausführungsbeispiel gemäß Fig. 5 im Wesentlichen dadurch, dass anstelle der als Steckplatz ausgebildeten Aufnahmevorrichtung 12 eine halbschalenförmige Aufnahme 22 vorgesehen ist, welche sehr einfach mit einem oder mehreren Datenträgern 3 bestückt werden kann. Dieses Ausführungsform eignet sich insbesondere zum Beschicken mit kontaktlosen Datenträgern 3. Die Entleerung solcher Werkstückträger 1 gestaltet sich besonders einfach, da die Datenträger z. B. von oben mittels eines Vakuumgreifers entnommen werden können oder die Werkstückträger 1 in eine Position gebracht werden können, in der die halbschalenförmige Aufnahme 22 nach unten weist, so dass die Datenträger schwerkraftbedingt aus dem Werkstückträger 1 herausfallen. Auch hier können die Führungsstifte 14 wieder zum Datentransfer und/oder Energietransfer zwischen benachbarten Werkstückträgern 1 dienen.

## Patentansprüche

1. Verfahren zur Personalisierung elektronischer Datenträger (3) in einem Personalisierungsautomaten, umfassend die Schritte:
- Transportieren mindestens eines elektronischen Datenträgers (3) mittels eines Werkstückträgers (1) und
- Übertragen von Personalisierungsdaten (M) von einem zentralen Verwaltungssystem (4) des Personalisierungsautomaten über den Werkstückträger (1) in einen Speicher des elektronischen Datenträgers (3), wobei ein Übertragen der Personalisierungsdaten von dem Werkstückträger (1) auf den elektronischen Datenträger (3), als ein Teilschritt (D) des Übertragens der Personalisierungsdaten, vom Werkstückträger (1) autonom gesteuert wird,
**dadurch gekennzeichnet, dass**
ein Übertragen der Personalisierungsdaten von dem zentralen Verwaltungssystem (4) des Personalisierungsautomaten zu dem Werkstückträger (1), als ein weiterer Teilschritt (B) des Übertragens der Personalisierungsdaten, vom Werkstückträger (1) autonom gesteuert wird.

2. Verfahren nach Anspruch 1, **dadurch gekennzeichnet, dass** der Schritt des Übertragens der Personalisierungsdaten auf den Datenträger (3) zumindest teilweise während des Schritts des Transportierens des Datenträgers (3) erfolgt.

3. Verfahren nach einem der Ansprüche 1 oder 2, **dadurch gekennzeichnet, dass** das Verfahren auf einer Mehrzahl solcher Werkstückträger (1) sich zeitlich überlappend parallel durchgeführt wird.

4. Verfahren nach einem der Ansprüche 1 bis 3, **gekennzeichnet durch** die Schritte der eigenständigen Kontaktaufnahme des Werkstückträgers (1) mit dem Verwaltungssystem (4) und Anfordern der Personalisierungsdaten vom Verwaltungssystem (4).

5. Verfahren nach Anspruch 4, **gekennzeichnet durch** den Schritt des Zwischenspeicherns der vom Verwaltungssystem (4) angeforderten Personalisierungsdaten auf dem Werkstückträger (1) vor ihrer Übertragung an den elektronischen Datenträger (3), insbesondere in einem RAM.

6. Verfahren nach einem der Ansprüche 1 bis 5, **gekennzeichnet durch** den Schritt des Durchführens einer Erfolgskontrolle **durch** den Werkstückträger (1) betreffend die Übertragung der Personalisierungsdaten in den Speicher des Datenträgers (3).

7. Verfahren nach einem der Ansprüche 1 bis 6, **dadurch gekennzeichnet, dass** mehrere solcher Werkstückträger aufeinanderfolgend in einem kontinuierlichen Prozess von einem Beschickungsort (A) zu einem Entladeort (B) erfolgt, der ggf. mit dem Beschickungsort (A) zusammenfällt, und dass ein Werkstückträger (1) aus dem kontinuierlichen Prozess ausgekoppelt wird, wenn die Übertragung der Personalisierungsdaten auf den zugehörigen elektronischen Datenträger (3) bei Erreichen des Entladeorts (B) noch nicht abgeschlossen ist.

8. Verfahren nach einem der Ansprüche 1 bis 7, **gekennzeichnet durch** den Schritt des Sendens von Statusinformationen von dem Werkstückträger (1) an das Verwaltungssystem (4) betreffend den Status der Übertragung der Personalisierungsdaten in den Speicher des elektronischen Datenträgers (3).

9. Verfahren nach einem der Ansprüche 1 bis 8, **gekennzeichnet durch** den Schritt des optischen Anzeigens von Statusinformationen am Werkstückträger (1) betreffend den Status der Übertragung der Personalisierungsdaten in den Speicher des elektronischen Datenträgers (3).

10. Verfahren nach einem der Ansprüche 1 bis 9, **dadurch gekennzeichnet, dass** zumindest ein Teil der auf den elektrischen Datenträger (3) zu übertragenden Personalisierungsdaten in einem separaten Datenträger (MEM 2) des Werkstückträgers (1) gespeichert und von diesem auf den elektronischen Datenträger (3) übertragen werden.

11. Verfahren nach einem der Ansprüche 1 bis 10, **dadurch gekennzeichnet, dass** zumindest ein Teil der zu übertragenden Personalisierungsdaten auf dem Werkstückträger (1) in einem Speicher (MEM) hinterlegt wird, bevor der Werkstückträger (1) mit dem elektronischen Datenträger (3) bestückt wird.

12. Verfahren nach einem der Ansprüche 1 bis 11, **dadurch gekennzeichnet, dass** das Verwaltungssystem (4) und der Werkstückträger (1) kontaktlos miteinander kommunizieren, insbesondere über Funk oder über eine Infrarotverbindung.

13. Verfahren nach einem der Ansprüche 1 bis 12, **dadurch gekennzeichnet, dass** eine gemeinsame Schnittstelle (COM 1) zur Datenübertragung zwischen dem Verwaltungssystem (4) und dem Werkstückträger (1) einerseits und zwischen dem Werkstückträger (1) und dem elektronischen Datenträger (3) andererseits genutzt wird.

14. Verfahren nach einem der Ansprüche 1 bis 13, **dadurch gekennzeichnet, dass** die Datenübertragung zwischen dem Verwaltungssystem (4) und dem Werkstückträger (1) eine Kommunikation zwischen mindestens zwei Werkstückträgern (1) involviert, insbesondere über eine Infrarot-Schnittstelle, eine NFC-Schnittstelle oder einer Bluetooth-Schnittstelle.

15. Verfahren nach Anspruch 14, **dadurch gekennzeichnet, dass** ein mit dem Verwaltungssystem (4) verknüpftes Bussystem zur Datenübertragung zwischen einer Mehrzahl von Werkstückträgern (1) genutzt wird.

16. Verfahren nach Anspruch 14 oder 15, **dadurch gekennzeichnet, dass** die Werkstückträger (1) während des Transportierens über Führungsstifte (14) miteinander verbunden sind, wobei auch die Datenübertragung zwischen den Werkstückträgern (1) über diese Führungsstifte (14) erfolgt.

17. Verfahren nach einem der Ansprüche 1 bis 16, **gekennzeichnet durch** die weiteren Schritte des Übertragens von Energie an den Werkstückträger (1) und des Speicherns der übertragenen Energie in einer wiederaufladbaren Energiequelle (6).

18. Verfahren nach Anspruch 17, **gekennzeichnet durch** den Schritt des visuellen Anzeigens des Ladezustands der Energiequelle (6) am Werkstückträger (1).

19. Verfahren nach einem der Ansprüche 17 bis 18, **dadurch gekennzeichnet, dass** für die Schritte der Datenübertragung und Energieübertragung an den Werkstückträger (1) eine gemeinsame Schnittstelle (COM 1) genutzt wird.

20. Verfahren nach einem der Ansprüche 17 bis 19, **dadurch gekennzeichnet, dass** die Energieübertragung über Führungsstifte (14) erfolgt, über die die Werkstückträger (1) während des Transportierens miteinander verbindbar sind.

21. Verfahren nach einem der Ansprüche 1 bis 20, **dadurch gekennzeichnet, dass** der Werkstückträger (1) unterschiedliche Werkstückaufnahmen zur Aufnahme unterschiedlich ausgebildeter elektronischer Datenträger (3) umfasst, und der elektronische Datenträger (3) in einer für ihn geeigneten Werkstückaufnahme befestigt wird.

22. Personalisierungsautomat zur Personalisierung elektronischer Datenträger (3), umfassend:
- ein zentrales Verwaltungssystem (4),
- einen transportablen Werkstückträger (1) zum Transportieren mindestens eines elektronischen Datenträgers (3),
- eine erste Schnittstelle (COM 1) am Werkstückträger (1) zur Datenübertragung zwischen dem Werkstückträger (1) und dem Verwaltungssystem (4),
- eine zweite Schnittstelle (COM 2) am Werkstückträger (1), die ggf. mit der ersten Schnittstelle (COM 1) als gemeinsame Schnittstelle realisiert ist, zur Datenübertragung zwischen dem Werkstückträger (1) und einem mittels des Werkstückträgers (1) zu transportierenden elektronischen Datenträgers (3), und
- eine programmierbare Steuerung (CTRL) im Werkstückträger (1), welche eingerichtet ist, die Übertragung von Personalisierungsdaten (M) von dem Werkstückträger (1) in einen Speicher des mittels des Werkstückträgers (1) zu transportierenden elektronischen Datenträgers (3) autonom zu steuern, **dadurch gekennzeichnet, dass**
die programmierbare Steuerung (CTRL) im Werkstückträger (1) eingerichtet ist, die Übertragung der Personalisierungsdaten (M) von dem Verwaltungssystem (4) zu dem Werkstückträger (1) autonom zu steuern.

23. Personalisierungsautomat nach Anspruch 22, **dadurch gekennzeichnet, dass** der Automat angepasst ist zur Durchführung eines Verfahrens nach einem der Ansprüche 1 bis 21.

## Claims

1. A method for personalizing electronic data carriers (3) in a personalization machine, comprising the steps of:
- transporting at least one electronic data carrier (3) by means of a work piece carrier (1), and
- transferring personalization data (M) from a central management system (4) of the personalization machine via the workpiece carrier (1) into a memory of the electronic data carrier (3), wherein a transfer of the personalization data from the workpiece carrier (1) onto the electronic data carrier (3) is autonomously controlled by the workpiece carrier (1), as a substep (D) of the transfer of personalization data,
**characterized in that**
a transfer of personalization data from the central management system (4) of the personalization machine to the workpiece carrier (1) is autonomously controlled by the workpiece carrier (1), as a further substep (B) of the transfer of personalization data.

2. The method according to claim 1, **characterized in that** the step of transferring the personalization data to the data carrier (3) is effected at least partly during the step of transporting the data carrier (3).

3. The method according to either of claims 1 and 2, **characterized in that** the method is carried out on a plurality of such workpiece carriers (1) in parallel with a time overlap.

4. The method according to any of claims 1 to 3, **characterized by** the steps of the workpiece carrier (1) independently contacting the management system (4) and requesting the personalization data from the management system (4).

5. The method according to claim 4, **characterized by** the step of temporarily storing the personalization data requested from the management system (4) on the workpiece carrier (1) before their transfer to the electronic data carrier (3), in particular in a RAM.

6. The method according to any of claims 1 to 5, **characterized by** the step of the workpiece carrier (1) carrying out a check of success relating to the transfer of the personalization data into the memory of the data carrier (3).

7. The method according to any of claims 1 to 6, **characterized in that** a plurality of such workpiece carriers is effected [*sic*] consecutively in a continuous process from a loading place (A) to an unloading place (B), which optionally coincides with the loading place (A), and a workpiece carrier (1) is decoupled from the continuous process when the transfer of the personalization data to the associated electronic data carrier (3) is not yet completed upon reaching the unloading place (B).

8. The method according to any of claims 1 to 7, **characterized by** the step of sending status information from the workpiece carrier (1) to the management system (4) relating to the status of the transfer of the personalization data into the memory of the electronic data carrier (3).

9. The method according to any of claims 1 to 8, **characterized by** the step of optically displaying status information on the workpiece carrier (1) relating to the status of the transfer of the personalization data into the memory of the electronic data carrier (3).

10. The method according to any of claims 1 to 9, **characterized in that** at least a part of the personalization data to be transferred to the electrical [*sic*] data carrier (3) are [*sic*] stored in a separate data carrier (MEM 2) of the workpiece carrier (1) and transferred therefrom to the electronic data carrier (3).

11. The method according to any of claims 1 to 10, **characterized in that** at least a part of the personalization data to be transferred is stored on the workpiece carrier (1) in a memory (MEM) before the workpiece carrier (1) is loaded with the electronic data carrier (3).

12. The method according to any of claims 1 to 11, **characterized in that** the management system (4) and the workpiece carrier (1) communicate with each other contactlessly, in particular via radio or via an infrared connection.

13. The method according to any of claims 1 to 12, **characterized in that** a common interface (COM 1) is used for data transfer between the management system (4) and the workpiece carrier (1), on the one hand, and between the workpiece carrier (1) and the electronic data carrier (3), on the other hand.

14. The method according to any of claims 1 to 13, **characterized in that** the data transfer between the management system (4) and the workpiece carrier (1) involves a communication between at least two workpiece carriers (1), in particular via an infrared interface, a NFC interface or a Bluetooth interface.

15. The method according to claim 14, **characterized in that** a bus system linked with the management system (4) is used for data transfer between a plurality of workpiece carriers (1).

16. The method according to claim 14 or 15, **characterized in that** the workpiece carriers (1) are interconnected via guide pins (14) during transport, whereby the data transfer between the workpiece carriers (1) is also effected via said guide pins (14).

17. The method according to any of claims 1 to 16, **characterized by** the further steps of transferring energy to the workpiece carrier (1) and storing the transferred energy in a rechargeable energy source (6).

18. The method according to claim 17, **characterized by** the step of visually displaying the state of charge of the energy source (6) on the workpiece carrier (1).

19. The method according to either of claims 17 to 18, **characterized in that** for the steps of data transfer and energy transfer to the workpiece carrier (1) a common interface (COM 1) is used.

20. The method according to any of claims 17 to 19, **characterized in that** the energy transfer is effected via guide pins (14) via which the workpiece carriers (1) are interconnectable during transport.

21. The method according to any of claims 1 to 20, **characterized in that** the workpiece carrier (1) comprises different workpiece supports for receiving differently configured electronic data carriers (3), and the electronic data carrier (3) is fastened in a workpiece support suitable therefor.

22. A personalization machine for personalizing electronic data carriers (3), comprising:
- a central management system (4),
- a transportable workpiece carrier (1) for transporting at least one electronic data carrier (3),
- a first interface (COM 1) on the workpiece carrier (1) for data transfer between the workpiece carrier (1) and the management system (4),
- a second interface (COM 2) on the workpiece carrier (1), which is optionally realized as a common interface with the first interface (COM 1), for data transfer between the workpiece carrier (1) and an electronic data carrier (3) to be transported by means of the workpiece carrier (1), and
- a programmable control (CTRL) in the workpiece carrier (1) which is adapted to autonomously control the transfer of personalization data (M) from the workpiece carrier (1) into a memory of the electronic data carrier (3) to be transported by means of the workpiece carrier (1), **characterized in that**
the programmable control (CTRL) in the workpiece carrier (1) is adapted to autonomously control the transfer of personalization data (M) from the management system (4) to the workpiece carrier (1).

23. The personalization machine according to claim 22, **characterized in that** the machine is adapted for carrying out a method according to any of claims 1 to 21.

## Revendications

1. Procédé de personnalisation de supports de données électroniques (3) dans un automate de personnalisation, comprenant les étapes suivantes :
- transport d'au moins un support de données électronique (3) au moyen d'un porte-pièces (1) et
- transmission de données de personnalisation (M) d'un système de gestion central (4) de l'automate de personnalisation à une mémoire du support de données électroniques (3) par l'intermédiaire du porte-pièces (1), une transmission des données de personnalisation du porte-pièces (1) au support de données électronique (3) étant, en tant qu'une étape partielle (D) de la transmission des données de personnalisation, commandée de manière autonome par le porte-pièces (1),
**caractérisé en ce qu'**une transmission des données de personnalisation du système de gestion central (4) de l'automate de personnalisation au porte-pièces (1) est commandée, en tant qu'une autre étape partielle (B) de la transmission des données de personnalisation, de manière autonome par le porte-pièces (1).

2. Procédé selon la revendication 1, **caractérisé en ce que** l'étape de la transmission des données de personnalisation au support de données (3) a lieu au moins partiellement durant l'étape du transport du support de données (3).

3. Procédé selon une des revendications 1 ou 2, **caractérisé en ce que** le processus est effectué parallèlement sur plusieurs tels porte-pièces (1) de manière s'imbriquant dans le temps.

4. Procédé selon une des revendications de 1 à 3, **caractérisé par** les étapes de la prise de contact autonome du porte-pièces (1) avec le système de gestion (4) et de la demande des données de personnalisation au système de gestion (4).

5. Procédé selon la revendication 4, **caractérisé par** l'étape de la mémorisation temporaire sur le porte-pièces (1) des données de personnalisation requises de la part du système de gestion (4) avant leur transmission au support de données électronique (3), notamment dans une RAM.

6. Procédé selon une des revendications de 1 à 5, **caractérisé par** l'étape de l'exécution par le porte-pièces (1) d'un contrôle du résultat concernant la transmission des données de personnalisation dans la mémoire du support de données (3).

7. Procédé selon une des revendications de 1 à 6, **caractérisé en ce que** plusieurs tels porte-pièces (1) sont acheminés successivement dans un processus continu d'un lieu de chargement (A) à un lieu de déchargement (B), lequel coïncidé éventuellement avec le lieu de chargement (A), et **en ce qu'**un porte-pièces (1) est écarté du processus continu quand la transmission des données de personnalisation sur le support de données électronique (3) correspondant n'est pas encore achevée au moment où il atteint le lieu de déchargement (B).

8. Procédé selon une des revendications de 1 à 7, **caractérisé par** l'étape de l'envoi, du porte-pièces (1) au système de gestion (4), d'informations de statut concernant le statut de la transmission des données de personnalisation dans la mémoire du support de données électronique (3).

9. Procédé selon une des revendications de 1 à 8, **caractérisé par** l'étape de l'affichage optique sur le porte-pièces (1) d'informations concernant le statut de la transmission des données de personnalisation dans la mémoire du support de données électronique (3).

10. Procédé selon une des revendications de 1 à 9, **caractérisé en ce qu'**au moins une partie des données de personnalisation devant être transmises au support de données électrique (3) sont mémorisées dans un support de données à part (MEM 2) du porte-pièces (1) et sont transmises à partir de ce dernier au support de données électronique (3).

11. Procédé selon une des revendications de 1 à 10, **caractérisé en ce qu'**au moins une partie des données de personnalisation devant être transmises est déposée sur le porte-pièces (1) dans une mémoire (MEM) avant que le porte-pièces (1) soit chargé du support de données électronique (3).

12. Procédé selon une des revendications de 1 à 11, **caractérisé en ce que** le système de gestion (4) et le porte-pièces (1) communiquent sans contact l'un avec l'autre, notamment par radio ou par une connexion infrarouge.

13. Procédé selon une des revendications de 1 à 12, **caractérisé en ce qu'**une interface commune (COM1) est utilisée pour la transmission de données entre le système de gestion (4) et le porte-pièces (1) d'une part et entre le porte-pièces (1) et le support de données électronique (3) d'autre part.

14. Procédé selon une des revendications de 1 à 13, **caractérisé en ce que** la transmission de données entre le système de gestion (4) et le porte-pièces (1) implique une communication entre au moins deux porte-pièces (1), notamment par une interface infrarouge, une interface NFC ou une interface Bluetooth.

15. Procédé selon la revendication 14, **caractérisé en ce qu'**un système de bus relié au système de gestion (4) est utilisé pour la transmission de données entre plusieurs porte-pièces (1).

16. Procédé selon la revendication 14 ou 15, **caractérisé en ce que** les porte-pièces (1) sont connectés entre eux par des doigts de guidage (14) durant le transport, la transmission de données entre les porte-pièces (1) ayant également lieu par l'intermédiaire de ces doigts de guidage (14).

17. Procédé selon une des revendications de 1 à 16, **caractérisé par** les étapes supplémentaires de la transmission d'énergie au porte-pièces (1) et du stockage de l'énergie transmise dans une source d'énergie rechargeable (6).

18. Procédé selon la revendication 17, **caractérisé par** l'étape de l'affichage visuel sur le porte-pièces (1) de l'état de charge de la source d'énergie (6).

19. Procédé selon une des revendications de 17 à 18, **caractérisé en ce qu'**une interface commune (COM1) est utilisée pour les étapes de la transmission de données et de la transmission d'énergie au porte-pièces (1).

20. Procédé selon une des revendications de 17 à 19, **caractérisé en ce que** la transmission d'énergie a lieu par l'intermédiaire des doigts de guidage (14) par lesquels les porte-pièces (1) sont connectables les uns avec les autres durant le transport.

21. Procédé selon une des revendications de 1 à 20, **caractérisé en ce que** le porte-pièces (1) comprend différents logements de pièces pour le logement de supports de données électroniques (3) de réalisation différente, et que le support de données électroniques (3) est fixé dans un logement de pièces lui étant approprié.

22. Automate de personnalisation destiné à la personnalisation de supports de données électroniques (3), comprenant :
- un système de gestion central (4),
- un porte-pièces (1) transportable pour le transport d'au moins un support de données électronique (3),
- une première interface (COM1) au porte-pièces (1) pour la transmission de données entre le porte-pièces (1) et le système de gestion (4),
- une seconde interface (COM2) au porte-pièces (1), qui est éventuellement réalisée en tant qu'interface commune avec la première interface (COM1), pour la transmission de données entre le porte-pièces (1) et un support de données électronique (3) devant être transporté au moyen du porte-pièces (1), et
- une commande programmable (CTRL) dans le porte-pièces (1), qui est configurée pour commander de manière autonome la transmission de données de personnalisation (M) du porte-pièces (1) à une mémoire du support de données électroniques (3) devant être transporté au moyen du porte-pièces (1), **caractérisé en ce que**
la commande programmable (CTRL) est configurée dans le porte-pièces (1) pour commander de manière autonome la transmission des données de personnalisation (M) du système de gestion (4) au porte-pièces (1).

23. Automate de personnalisation selon la revendication 22, **caractérisé en ce que** l'automate est adapté à l'exécution d'un procédé selon une des revendications de 1 à 21.
